# EUROPEAN PATENT SPECIFICATION

(11) **EP 0 609 866 B1**
(45) Date of publication and mention of the grant of the patent: **07.05.1997**
(21) Application number: 94101570.3
(22) Date of filing: 02.02.1994
(51) Int. Cl.: F01M 3/02, F01M 9/00, F16N 39/08

(54) **Two-stroke engine and method of directly lubricating a piston of same**
Zweitakt-Brennkraftmaschine und Verfahren zur Schmierung eines Kolbens
Moteur à combustion interne à deux temps et procédé pour la lubrification directe d'un piston

(30) Priority: 03.02.1993 JP 39412/93
(43) Date of publication of application: 10.08.1994
(73) Proprietor: YAMAHA HATSUDOKI KABUSHIKI KAISHA, Iwata-shi Shizuoka-ken, 438 (JP)
(72) Inventor: Harada, Keiichi, Shizuoka-ken, 438 (JP)
(74) Representative: Grünecker, Kinkeldey, Stockmair & Schwanhäusser Anwaltssozietät

(56) References cited:
- DE-B- 1 175 489
- DE-C- 957 354
- RESEARCH DISCLOSURE vol. 1992, no. 340 , 1 August 1992 , EMSWORTH , XP000324126 AN. 'TWO-STROKE OIL DELIVERY SYSTEM USING GASOLINE AS A SOLVENT'
- PATENT ABSTRACTS OF JAPAN vol. 016, no. 069 (M-1212)20 February 1992 & JP-A-03 260 311 (SUZUKI MOTOR CORPORATION) 20 November 1991
- PATENT ABSTRACTS OF JAPAN vol. 017, no. 233 (M-1407)12 May 1993 & JP-A-04 362 209 (YAMAHA) 15 December 1992
- PATENT ABSTRACTS OF JAPAN vol. 7, no. 59 (M-199)11 March 1983 & JP-A-57 203 810 (KAWASAKI JUKOGYO K.K.) 14 December 1982

## Description

The present invention relates to a two-stroke engine and a method of lubricating a piston of same as indicated in the preamble portions of claims 1 and 8. In a two-stroke engine having a crank chamber used as a primary compression chamber for the intake air it is difficult if not impossible to store oil necessary for the lubrication at the bottom of the crank chamber. Therefore, also in order to reduce blue and white smoke emisions, lubricating oil is supplied through an oil pump directly to the spots of the engine to be lubricated such as the piston sliding surface of the cylinder or the bearing sections of the journals of the crank shaft. Such direct lubrication is frequently performed by the operation of a mechanical or an electromagnetic oil pump in such a manner that the lubricating oil stored in a separate lubricating oil tank is supplied directly to the piston sliding surface of the cylinder.

For lubricating combustion engines, it has already been proposed (see DE-AS-1 175 489) to employ a pump which sucks in and discharges both lubricating oil and fuel, said fuel being used for diluting the lubricating oil.

Furthermore, a two-stroke engine of the type described in the preamble of claim 1 is known from JP-A-32 60 311. Said known engine is provided with an oil supply arrangement for discharging oil directly to the cylinder wall surface so as to lubricate the piston directly.

Such direct lubrication of the piston sliding surface of the cylinder may lead to carbon particles generated by the combustion adhere mainly to the piston. Therefore, without regular maintenance and engine cleaning the lubricating of the engine is reduced which may cause piston seizure.

Accordingly, it is an objective of the present invention to provide a two-stroke internal combustion engine with direct lubrication of the piston along the sliding surface of the cylinder while avoiding the drawbacks of carbon particles being deposited at the cylinder surface so as to achieve a simple and reliable direct lubricating of the piston while assuring a clean sliding surface of same. Moreover, according to another aspect of the present invention it is an objective to provide an improved method for directly lubricating the piston of a two-stroke internal combustion engine.

According to the present invention the afore-indicated objectives are performed in that the two-stroke internal combustion engine of the type as indicated above comprises means for supplying lubricating oil and fuel to the piston sliding surface of the cylinder, and a control unit is provided for operating said oil pump of the lubricating oil supplying means and the fuel pump of the fuel supplying means for adjusting a lubricating oil/fuel ratio to be supplied to the piston sliding surface of the cylinder in response to engine operating conditions.

Moreover, according to the present invention the above-mentioned objective, in its method aspects, is performed in that the lubricating oil is diluted by fuel which in addition to the lubricating oil is fed to a piston sliding surface of a cylinder, a lubricating oil/ fuel ratio supplied to said piston sliding surface being adjusted in response to engine operating conditions.

Accordingly, in the two-stroke engine of the present invention not only lubricating oil is directly supplied to the piston sliding surface of the cylinder but also fuel is supplied to the piston sliding surface so that the lubricating oil is diluted with the fuel to reduce its viscosity. This renders the piston clean thereby reducing carbon deposits resulting from the combustion process and improving the reliability of piston lubricating.

Preferred embodiments of the present invention are laid-down in the dependent claims.

In the following the present invention is explained in greater detail by means of several embodiments thereof in conjunction with the accompanying drawings wherein:
Figure 1 is a longitudinal sectional view through a cylinder of a two-stroke engine according to the present invention disclosing the direct lubricating system accordig to one embodiment,
Figure 2 is a diagram showing the variability of an oil/fuel ratio adjusted in response to engine operating conditions such engine load and engine speed, thus said diagram indicating patterns of lubricating oil and fuel supply during engine operation,
Figure 3 is a diagram showing a pattern of lubricating oil and fuel supply in response to the warming-up of the engine, i.e. in terms of the temperature of the engine cooling water,
Figure 4 is a schematic sectional view of a cylinder according to another embodiment of the present invention,
Figure 5 is a schematic sectional view of a cylinder according to yet another embodiment of the present invention,
Figure 6 is a schematic sectional view of a fourth embodiment of the present invention, and
Figure 7 is a partial plan view of the separate discharge openings of the oil and fuel supply passageways opening to the cylinder wall of the cylinder bore.

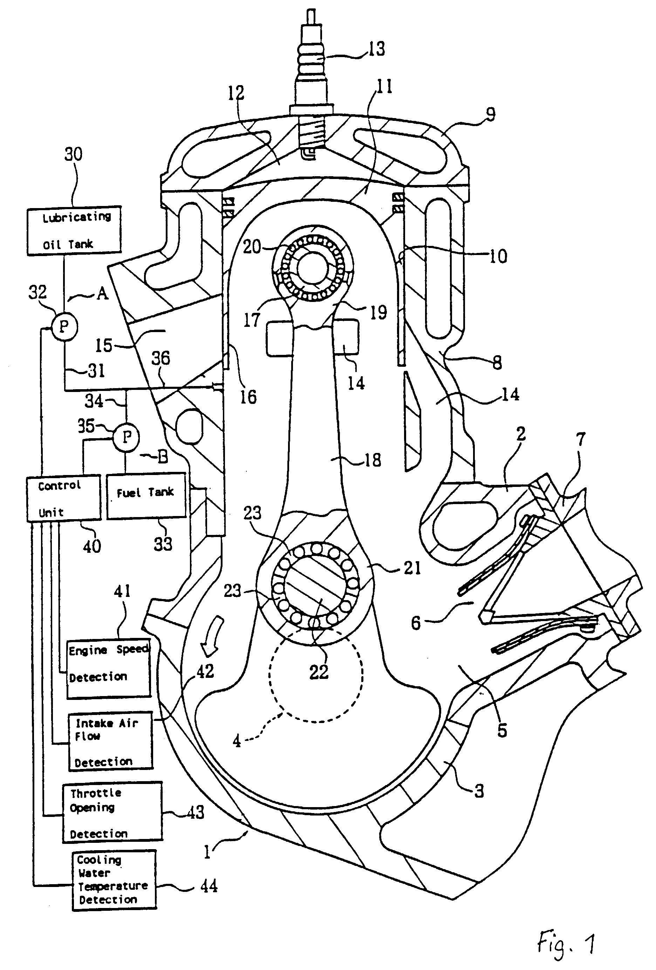

As shown in Figure 1 this embodiment of a two-stroke engine comprises a crank case 1 which consists of an upper case 2 and a lower case 3. Between the upper case 2 and the lower case 3 is supported a crank shaft 4 for free rotation and a crank chamber 5 is defined by the upper case and the lower case 3. An intake pipe 7 is mounted to the upper case 2 through a read valve 6 which permits only intake air flow from the intake pipe 7 to the crank chamber 5 so that the crank chamber 5 serves as a primary compression chamber for the intake air.

A cylinder block 8 is mounted on the upper case 2 and a cylinder head 9 is affixed to the cylinder block 8. The cylinder block 8 comprises at least one cylinder 10 with a piston 11 accommodated therein for reciprocal movement thus defining a combustion chamber 12 between the cylinder 10 of the cylinder block 8, the head section of the piston 11 and the cylinder head 9. An ignition plug 13 is mounted to the cylindrical head 9 facing the combustion chamber 12.

Three scavenging passages 14 are formed in the cylinder block 8 per one cylinder through which the crank chamber 5 is connected to the combustion chamber 12 during the scavenging stroke, as well as an exhaust passage 15 through which the exhasut gas is discharged from the combustion chamber during the exhaust stroke. The piston 11 comprises a skirt section 16 sliding on the inside surface of the cylinder 10 and a piston pin 17 passes through the skirt section 16. Through a bearing 20 which allows free rotation, the small end 19 of a connecting rod 18 is fitted to the piston pin 17 whereas the big end 21 of the connecting rod 18 is supported on a crank pin 22 of the crank shaft 4 through a bearing 23. This connecting rod 18 converts the reciprocal movement of the piston 11 to rotary movement which is transmitted to the crank shaft 4.

Means (not shown) are provided for delivering fuel to the combustion chamber 12 which is formed in part by the cylinder head recess shown. This may be any known type of charge former such as a carburetor which forms a portion of the throttle body or the intake pipe and, respectively, a fuel injector which can inject air either into the induction system, the crankcase chamber 5, scavenge passages 14 or directly into the combustion chamber 12 (cylinder head recess). If desired, air/fuel injection may also be employed. Although the particular type of charge-forming system incorporated is not an important feature it should be noted that the fuel is supplied to the charge former from a fuel tank shown schematically in Figure 1 and indicated by the reference numeral 33.

This two-stroke engine is provided with means (A) for supplying lubricating oil to the piston sliding surface 100 of the cylinder 10 and means B for supplying fuel to the piston sliding surface 100. The oil supplying means A comprises a lubricating oil tank 30 for storing lubricating oil, a supply passage 31 for supplying the lubricating oil and a pump 32 disposed in the supply passage 31. The fuel supply means B comprises a fuel tank for storing fuel, a supply passage 34 for supplying the fuel and a pump 35 disposed in the supply passage 34. According to the embodiment of Figure 1, the supply passage 31 of the oil supply means A and the supply passage 34 of the fuel supply means B are combined to form an oil/fuel-mixture supply passage 36 in which the lubricating oil and the fuel are pre-mixed together so as to be supplied to the piston sliding surface 100 of the cylinder 10.

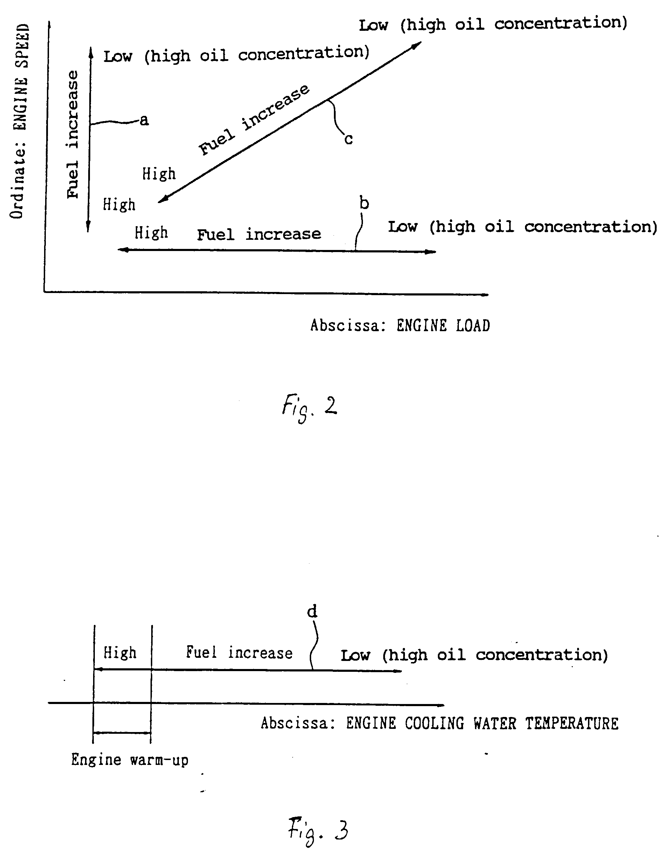

The pump 32 of the oil supply means A and the pump 35 of the fuel supply means B are controlled by a control unit 40 in accordance with engine operating conditions. To the control unit 40 the engine speed data from an engine speed detecting means 41, intake air flow data from an intake air flow detecting means 42, throttle opening data from a throttle opening detecting means 43 and cooling water temperature from a cooling water temperature detecting means 44 are inputted and on the basis of these data the mixing ratio between the lubricating and the fuel is determined freely in the control unit 40 according to the thus detected engine operating conditions. In the control unit 40, for example, supply patterns (a), (b) and (c) for lubricating oil and fuel can be set as shown in Figure 2. Supply pattern (a) is a setting example in which the concentration of lubricating oil is changed depending on engine speed, the concentration being increased with an increase in engine speed. Supply pattern (b) is another example of setting in which the concentration of lubricating oil is changed in terms of the engine load thus the concentration of oil in the oil/fuel mixture being increased with an increase in engine load. Moreover, supply pattern (c) is another example of setting in which the concentration of lubricating oil is changed depending on both engine speed and load thus that the concentration being changed proportionally with respect to engine speed and engine load. In the control unit 40 it is also possible to change the fuel flow rate while keeping the lubricating oil flow rate constant, to change the lubricating oil flow rate while keeping the fuel flow rate constant or to change both the flow rates of lubricating oil and fuel.

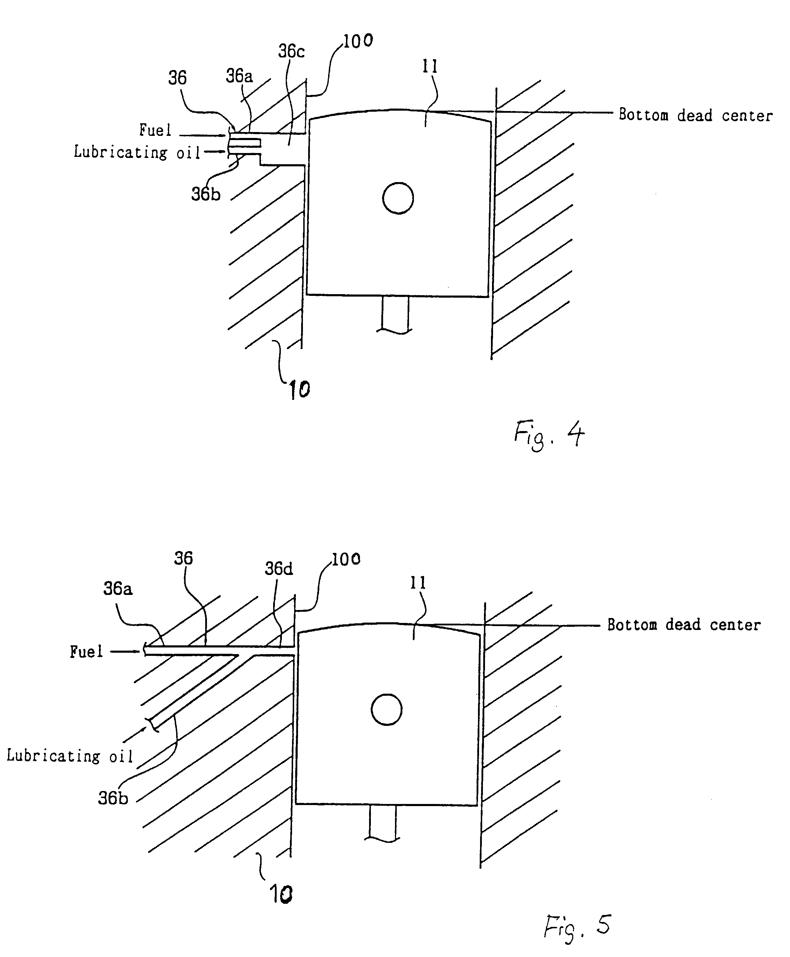

As shown in Figure 3, a supply pattern (d) of lubricating oil and fuel can be achieved in response to the temperature of the engine cooling water. This supply pattern (d) is a setting example in which the concentration of lubricating oil is changed in response to the cooling water temperature of the engine such that the flow rate of the lubricating oil being increased accept when the engine is initially warming-up and the cooling water temperature is low.

Thus, the diagrams according to Figures 2 and 3 elucidate the method for directly lubricating the piston sliding surface 100 of the engine by means of varying the degree of dilution of the lubricating oil through fuel in response to the engine operating conditions detected.

As indicated above, both lubricating oil and fuel are supplied and mixed together so that the lubricating oil is diluted with the fuel in order to reduce the viscosity of the oil. This dilution of the oil as well as the reciprocating movement of the piston 11 renders the piston 11 clean thereby reducing carbon deposits to piston 11 due to engine combustion and improve the reliable function of the piston 11.

In Figures 4-7 further embodiments of the layout of the fuel and oil supply arrangement are shown.

Specifically the constitution of the oil/fuel mixture supply passage 36 is shown in said embodiments. According to one embodiment as schematically also shown in Figure 1, lubricating oil and fuel are pre-mixed at a point upstream of the discharge opening on the piston sliding surface 100 and are pre-mixed at a point as close as possible to the inside surface (piston sliding surface 100) of the cylinder 10 in order to obtain a high response characteristic of changes in the mixing ratio between the lubricating oil and fuel. According to the embodiment of Figure 4 there is a cavity 33c at the end of the fuel and oil supply passages 36a, 36b, said cavity 36c having a large cross-sectional area. The fuel passage 36a and the lubricating oil supply passage 36b are formed independently and open into the cavity 33c of larger cross-section. The cavity 36c opens to the inside wall 100 of the cylinder. This opening of the cavity 36c is located such that the piston 11 closes the discharge opening when the piston 11 reaches its bottom dead center. This layout permits fuel and lubricating oil to be mixed effectively in the cavity 36c so that the lubricating oil is diluted with the fuel to reduce the viscosity of the oil. This mixing as well as the reciprocating movement of the piston 11 renders the piston skirt surface clean thereby reducing carbon deposits on the piston 11.

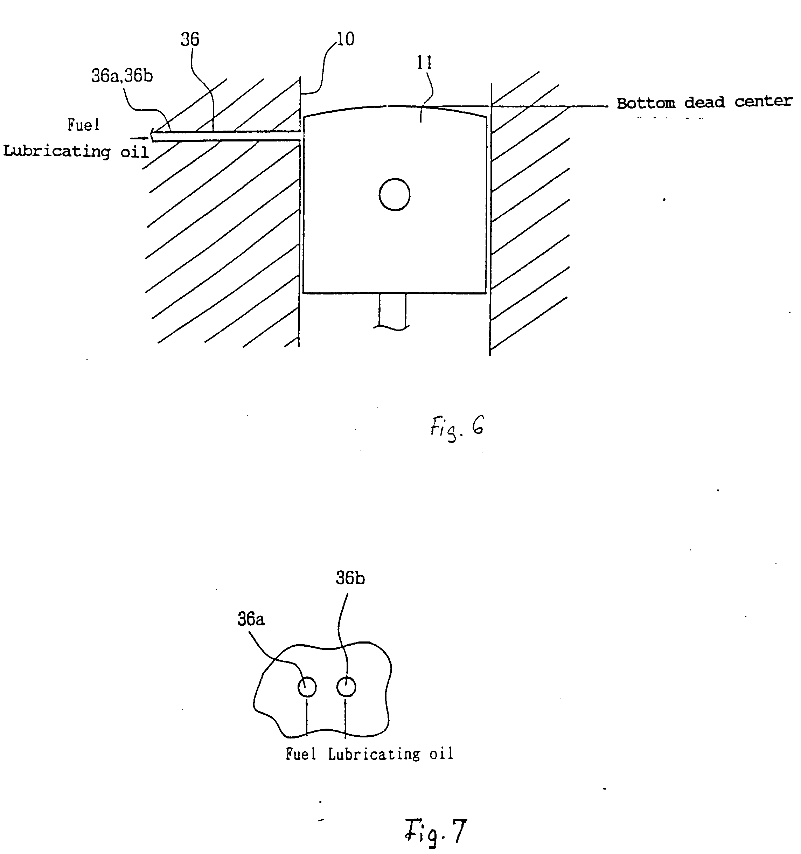

Another embodiment without a cavity at the end of the oil/fuel mixture supply passage 36 is shown in Figure 5. In that case the fuel supply passage 36a and the lubricating oil supply passage 36b join to the oil/fuel mixture supply passage 36d which is at the same cross sectional area as both of the independent fuel and oil supply passages 36a, 36b. The pre-mixing supply passage 36d opens to the piston sliding surface (inner wall) 100 of the cylinder 10. This discharge opening of the mixing passage 36d is located below the bottom dead center of the piston 11 so to be closed through the piston 11 when same approaches to its bottom dead center. Such a layout permits fuel and lubricating oil to be pre-mixed in the mixing passage 36d which is short and opens to the inside wall 100 of the cylinder 10 thus assuring a high responsiveness to changes in the mixing ratio between fuel and oil, reducing the viscosity of the lubricating oil by means of its dilution through the additional fuel.

Finally, in Figures 6 and 7 another embodiment is shown which differs from the preceding embodiments by means of the absence of a pre-mixing cavity or oil/fuel mixture supply passage but the provision of a fuel supply passage 36a and a lubricating oil supply passage 36b both being formed independently from each other and both opening separately to the inside wall (piston sliding surface) 100 of the cylinder 10. The openings of the fuel supply passage 36a and the lubricating oil supply passage 36b are located in parallel to each other at about the same level as shown in Figure 7 so that both being closed when the piston 11 aproaches its bottom dead center. As shown in Figure 6 both passageways 36a, 36b open to the cylinder bore below the bottom dead center of the piston 11. In this case the fuel supplied from the fuel supply passage 36a and the lubricating oil supplied from the lubricating oil supply passage 36b mix on the piston sliding surface 100 of the cylinder 10 said mixing-up being promoted by the reciprocating movement of the piston 11 so that the lubricating oil is sufficiently diluted with fuel to reduce the viscosity of the oil. Also in this way deposition of carbon particles onto the piston surface is minimized.

## Claims

1. Two-stroke engine comprising a cylinder block (8) having at least one cylinder (10) and a piston (11) reciprocatingly supported therein to slide along a cylinder wall of the cylinder (10), said cylinder wall forming a piston sliding surface (100), a crank chamber (5) rotatably accommodating a crank shaft (4) for reciprocating the piston (11) and a direct lubricating system supplying lubricating oil under pressure directly to the spots to be lubricated with a direct lubricating system comprising an oil supply means (A) comprising a source of pressurized lubricating oil (30,32) including an oil pump (32) and at least one lubricating oil supplying passage (31,36b), wherein a fuel supply means (B) comprises a source of pressurized fuel (33,35) including a fuel pump (35) and at least one fuel supply passage (34, 36a), **characterized in that** the piston sliding surface (100) of the cylinder (10) comprises means for supplying lubricating oil and fuel to the piston sliding surface (100) of the cylinder (10), and a control unit (40) is provided for operating said oil pump (32) of the lubricating oil supplying means (A) and the fuel pump (35) of the fuel supplying means (B) adjusting a lubricating oil/fuel ratio to be supplied to the piston sliding surface (100) of the cylinder (10) in response to engine operating conditions.

2. Two-stroke engine as claimed in claim 1, **characterized in that** lubricating oil supplying means (A) and fuel supplying means (B) are provided separately or jointly to supply lubricating oil and fuel to the piston sliding surface (100) separately or in a pre-mixed condition.

3. Two-stroke engine as claimed in at least one of the preceding claims 1 and 2, **characterized in that** the fuel supplying passage (34) and the lubricating oil supplying passage (31) are combined to an oil/fuel-mixture supplying passage (36) opening to the piston sliding surface (100) of the cylinder (10).

4. Two-stroke engine as claimed in at least one of the preceding claims 1-2, **characterized in that** the fuel supplying passage (36a) and the oil supplying passage (36b) open independently from each other to the piston sliding surface (100) of the cylinder (10).

5. Two-stroke engine as claimed in claim 3, **characterized in that** the oil/fuel-mixture supplying passage (36) or the fuel and oil supplying passages (36a,36b) open to the piston sliding surface (100) of the cylinder (10) below a bottom dead center of the piston (11).

6. Two-stroke engine as claimed in at least one of the preceding claims 1-5, **characterized in that** the fuel and oil supplying passages (36a,36b) open into a pre-mixing cavity (36c) which cavity (36c) opens to the piston sliding surface (100) of the cylinder (10).

7. Two-stroke engine as claimed in at least one of claims 1 to 6, **characterized in that** a cooling water temperature sensor (44), a throttle opening detecting sensor (43), an intake air flow detecting sensor (42) and an engine speed detecting sensor (41) are provided, the output of them is fed to the control unit (40) for operating the oil pump (32) and the fuel pump (35) in response to the conditions detected.

8. Method for lubricating a piston of a two-stroke engine by means of a direct lubricating system, **characterized in that** the lubricating oil is diluted by fuel which, in addition to the lubricating oil, is fed to a piston sliding surface (100) of a cylinder (10), a lubricating oil/fuel ratio supplied to said piston sliding surface (100) being adjusted in response to engine operating conditions detected.

9. Method as claimed in claim 8, **characterized in that** the lubricating oil/fuel ratio of the amounts of oil and fuel supplied to the piston sliding surface (100) of the cylinder (10) is varied in response to the engine operating conditions detected through controlling the operation of an oil and/or fuel pump by means of a control unit (40).

## Patentansprüche

1. Zweitaktmotor mit einem Zylinderblock (8), der zumindest einen Zylinder (10) aufweist und einen Kolben (11), der hin- und hergehend in diesem gelagert ist, um entlang einer Zylinderwandung des Zylinders (10) zu gleiten, wobei die Zylinderwandung eine Kolbengleitoberfläche (100) bildet, mit einer Kurbelkammer (5), in der drehbar eine Kurbelwelle (4) zur Hin- und Herbewegung des Kolbens (11) aufgenommen ist und einem Direkt-Schmiersystem, das Schmieröl unter Druck direkt zu den Stellen zuführt, die geschmiert werden sollen, wobei das Direkt-Schmiersystem eine Ölzuführungseinrichtung (A) mit einer Quelle von unter Druck stehendem Schmieröl (30, 32), die eine Ölpumpe (32) einschließt, und zumindest einen Schmieröl-Zuführungskanal (31, 36b) aufweist, wobei eine Kraftstoffzuführungseinrichtung (B) eine Quelle von unter Druck stehendem Kraftstoff (33, 35), die eine Kraftstoffpumpe (35) enthält, und zumindest einen Kraftstoff zuführungskanal (34, 36a) aufweist, **dadurch gekennzeichnet**, daß die Kolbengleitoberfläche (100) des Zylinders (10) eine Einrichtung zur Zuführung von Schmieröl und Kraftstoff zu der Kolbengleitoberfläche (100) des Zylinders (10) aufweist und eine Steuereinheit (40) vorgesehen ist, zur Betätigung der Ölpumpe (32) der Schmieröl-Zuführungseinrichtung (A) und der Kraftstoffpumpe (35) der Kraftstoff-Zuführungseinrichtung (B), die ein Schmieröl/Kraftstoff-Verhältnis einstellt, das zu der Kolbengleitoberfläche (100) des Zylinders (10) in Abhängigkeit von Motorbetriebsbedingungen zugeführt werden soll.

2. Zweitaktmotor nach Anspruch 1, **dadurch gekennzeichnet**, daß die Schmieröl-Zuführungseinrichtung (A) und die Kraftstoff-Zuführungseinrichtung (B) separat oder gemeinsam vorgesehen sind, um Schmieröl und Kraftstoff zu der Kolbengleitoberfläche (100) getrennt oder in einem vorgemischten Zustand zuzuführen.

3. Zweitaktmotor nach zumindest einem der vorhergehenden Ansprüche 1 und 2, **dadurch gekennzeichnet**, daß der Kraftstoff-Zuführungskanal (34) und der Schmieröl-Zuführungskanal (31) zu einem Öl/Kraftstoff-Gemisch-Zuführungskanal (36) kombiniert sind, der sich auf der Kolbengleitoberfläche (100) des Zylinders (10) öffnet.

4. Zweitaktmotor nach zumindest einem der vorhergehenden Ansprüche 1 bis 2, **dadurch gekennzeichnet**, daß der Kraftstoff-Zuführungskanal (36a) und der Ölzuführungskanal (36b) sich unabhängig voneinander auf der Kolbengleitoberfläche (100) des Zylinders (10) öffnen.

5. Zweitaktmotor nach Anspruch 3, **dadurch gekennzeichnet**, daß der Öl/Kraftstoff-Gemisch-Zuführungskanal (36) oder die Kraftstoff- und Öl-Zuführungskanäle (36a, 36b) sich auf der Kolbengleitoberfläche (100) des Zylinders (10) unterhalb eines unteren Totpunktes des Kolbens (11) öffnen.

6. Zweitaktmotor nach zumindest einem der vorhergehenden Ansprüche 1 bis 5, **dadurch gekennzeichnet**, daß die Kraftstoffund Öl-Zuführungskanäle (36a, 36b) sich in eine Vormisch-Kammer (36c) öffnen, wobei sich diese Kammer (36c) zur Kolbengleitoberfläche (100) des Zylinders (10) öffnet.

7. Zweitaktmotor nach zumindest einem der Ansprüche 1 bis 6, **dadurch gekennzeichnet**, daß ein Kühlwassertemperatursensor (44), ein Drosselöffnungs-Erfassungssensor (43), ein Ansaugluftströmungs-Erfassungssensor (42) und ein Motordrehzahlsensor (41) vorgesehen sind, deren Ausgangssignale zu der Steuereinheit (40) zur Betätigung der Ölpumpe (32) und der Kraftstoffpumpe (35) in Abhängigkeit von den erfaßten Bedingungen geführt werden.

8. Verfahren zum Schmieren eines Kolbens eines Zweitaktmotors durch ein Direkt-Schmiersystem, **dadurch gekennzeichnet**, daß das Schmieröl durch Kraftstoff verdünnt wird, der, zusätzlich zu dem Schmieröl, zu einer Kolbengleitoberfläche (100) eines Zylinders (10) geführt wird, wobei ein Schmieröl/Kraftstoff-Verhältnis, das zu der Kolbengleitoberfläche (100) geführt wird, in Abhängigkeit von den erfaßten Motorbetriebsbedingungen eingestellt wird.

9. Verfahren nach Anspruch 8, **dadurch gekennzeichnet**, daß das Schmieröl/Kraftstoff-Verhältnis der Mengen an Öl und Kraftstoff, zugeführt zu der Kolbengleitoberfläche (100) des Zylinders (10), in Abhängigkeit von den erfaßten Motorbetriebsbedingungen durch Steuern der Arbeitsweise einer Öl- und/oder Kraftstoff-Pumpe durch eine Steuereinheit (40) verändert wird.

## Revendications

1. Moteur à deux temps comprenant un bloc-cylindres (8) ayant au moins un cylindre (10) et un piston (11) supporté en va-et-vient à l'intérieur de celui-ci pour coulisser le long d'une paroi de cylindre du cylindre (10), ladite paroi de cylindre formant une surface de coulissement de piston (100), une chambre de manivelle (5) recevant de manière rotative un arbre à manivelle (4) pour faire aller et venir le piston (11) et un système de lubrification directe amenant de l'huile lubrifiante sous pression directement aux emplacements à lubrifier avec un système de lubrification directe comprenant des moyens d'amenée d'huile (A) comprenant une source d'huile lubrifiante sous pression (30, 32) comprenant une pompe à huile (32) et au moins un passage d'amenée d'huile lubrifiante (31, 36b), dans lequel des moyens d'amenée de carburant (B) comprennent une source de carburant sous pression (33, 35) comprenant une pompe à carburant (35) et au moins un passage d'amenée de carburant (34, 36a), caractérisé en ce que la surface de coulissement de piston (100) du cylindre (10) comprend des moyens pour amener l'huile lubrifiante et le carburant jusqu'à la surface de coulissement de piston (100) du cylindre (10), et une unité de commande (40) est prévue pour faire fonctionner ladite pompe à huile (32) des moyens d'amenée d'huile lubrifiante (A) et la pompe à carburant (35) des moyens d'amenée de carburant (B) réglant un rapport huile lubrifiante/carburant à amener jusqu'à la surface de coulissement de piston (100) du cylindre (10) en réponse aux conditions de fonctionnement du moteur.

2. Moteur à deux temps selon la revendication 1, caractérisé en ce que les moyens d'amenée d'huile lubrifiante (A) et les moyens d'amenée de carburant (B) sont prévus séparément ou conjointement pour amener de l'huile lubrifiante et du carburant jusqu'à la surface de coulissement de piston (100) séparément ou dans un état prémélangé.

3. Moteur à deux temps selon au moins l'une des revendications précédentes 1 et 2, caractérisé en ce que le passage d'amenée de carburant (34) et le passage d'amenée d'huile lubrifiante (31) sont combinés en un passage d'amenée de mélange huile/carburant (36) débouchant sur la surface de coulissement de piston (100) du cylindre (10).

4. Moteur à deux temps selon au moins l'une des revendications 1 à 2, caractérisé en ce que le passage d'amenée de carburant (36a) et le passage d'amenée d'huile (36b) débouchent indépendamment l'un de l'autre sur la surface de coulissement de piston (100) du cylindre (10).

5. Moteur à deux temps selon la revendication 3, caractérisé en ce que le passage d'amenée de mélange huile/carburant (36) ou les passages d'amenée de carburant et d'amenée d'huile (36a, 36b) débouchent sur la surface de coulissement de piston (100) du cylindre (10) au-dessous d'un point mort inférieur du piston (11).

6. Moteur à deux temps selon au moins l'une des revendications précédentes 1 à 5, caractérisé en ce que les passages d'amenée de carburant et d'huile (36a, 36b) débouchent dans une cavité de prémélange (36c), laquelle cavité (36c) débouche sur la surface de coulissement de piston (100) du cylindre (10).

7. Moteur à deux temps selon au moins l'une des revendications 1 à 6, caractérisé en ce qu'un capteur de température (44) de l'eau de refroidissement, un capteur de détection (43) d'ouverture d'étrangleur, un capteur de détection (42) de flux d'air d'admission et un capteur de détection (41) de régime du moteur sont prévus, dont la sortie est délivrée jusqu'à l'unité de commande (40) pour faire fonctionner la pompe à huile (32) et la pompe à carburant (35) en réponse aux conditions détectées.

8. Procédé pour la lubrification d'un piston d'un moteur à deux temps au moyen d'un système de lubrification directe, caractérisé en ce que l'huile lubrifiante est diluée par le carburant qui, en plus de l'huile lubrifiante, est amené jusqu'à une surface de coulissement de piston (100) d'un cylindre (10), un rapport huile lubrifiante/carburant amenés jusqu'à ladite surface de coulissement de piston (100) étant réglé en réponse aux conditions de fonctionnement du moteur détectées.

9. Procédé selon la revendication 8, caractérisé en ce que le rapport huile lubrifiante/carburant des quantités d'huile et de carburant amenées jusqu'à la surface de coulissement de piston (100) du cylindre (10) varie en réponse aux conditions de fonctionnement du moteur détectées par la commande du fonctionnement d'une pompe à huile et/ou à carburant au moyen d'une unité de commande (40).
